# EUROPÄISCHE PATENTSCHRIFT

(11) **EP 1 416 129 B1**
(45) Veröffentlichungstag und Bekanntmachung des Hinweises auf die Patenterteilung: **14.09.2005**
(21) Anmeldenummer: 02022815.1
(22) Anmeldetag: 12.10.2002
(51) Int. Cl.: F01M 11/00, B29C 65/06, B29C 65/78

(54) **Verfahren zur Herstellung einer Kunststoffölwanne mit integriertem Ölfilter**
Method of producing a plastic oil pan with integrated oil filter
Procedé de fabrication d'un carter d'huile ayant un filtre à huile intégré

(43) Veröffentlichungstag der Anmeldung: 06.05.2004
(73) Patentinhaber: IBS Filtran Kunststoff-/Metallerzeugnisse GmbH, 51597 Morsbach (DE)
(72) Erfinder: Mauelshagen, Michael, 51580 Reichshof-Denklingen (DE); Beer, Markus, 51597 Morsbach (DE)
(74) Vertreter: Lang, Friedrich

(56) Entgegenhaltungen:
- EP-A- 0 707 919
- US-A- 5 049 274
- US-A- 5 853 577
- US-B1- 6 290 843
- PATENT ABSTRACTS OF JAPAN vol. 2000, no. 25, 12. April 2001 (2001-04-12) & JP 2001 225388 A (HONDA MOTOR CO LTD), 21. August 2001 (2001-08-21)

## Beschreibung

Gegenstand der Erfindung ist ein Verfahren zur Herstellung einer Kunststoffölwanne mit integriertem Ölfilter zur Verwendung in Motoren und Getrieben.

Nach dem Stand der Technik erfolgt die Ölfiltrierung bei einem Motor- oder Automatikgetriebe durch separat außerhalb der Ölwanne angeordnete Ölfilter. Hierbei werden Ölfilter, Ölwannendichtungen und Ölwanne als Einzelkomponenten verwendet. Die Anordnung des Ölfilters erfolgt im Allgemeinen so, dass bei Wartungsarbeiten der Ölfilter leicht zugänglich ist und auf einfache Weise ausgetauscht werden kann. Dies wird meist dadurch gewährleistet, dass die Ölfilter aus der Ebene des Motors herausragend angeordnet werden. Damit dieser Platzbedarf nicht zu groß wird, ist die Größe der Ölfilter begrenzt, so dass sie eine geringe Filteroberfläche aufweisen und relativ häufig ausgewechselt werden müssen.

Um diese Nachteile zu vermeiden, beschreibt der neuere Stand der Technik Ölfilter, die in die Ölwannen integriert sind. Dabei sind sowohl Konstruktionen bekannt, bei denen der Ölfilter als separates Kunststoffteil in der Ölwanne angeordnet ist, als auch Konstruktionen, bei denen eine Filterhalbschale durch einen Teilbereich des Ölwannenbodens gebildet wird. Derartige Ölwannen sind beispielsweise beschrieben in den Druckschriften DE 197 35 445 A1 und DE 100 08 692 A1 der Anmelderin sowie in Druckschrift US 6,290,843 B1.

Die Herstellung derartiger Ölwannen mit integrierten Ölfiltern erfolgt nach dem Stand der Technik üblicherweise durch Verschweißen, wobei häufig ein Vibrationsschweißen angewendet wird. Weiterhin sind auch Laserschweißmethoden bekannt, die sich jedoch bisher in der Praxis nicht durchgesetzt haben.

Ein solches Laserschweißverfahren ist beispielsweise beschrieben in der EP 0 995 535 A2. Dabei besteht eine Filterhalbschale aus laserlichtdurchlässigem Kunststoff und die andere Filterhalbschale aus laserlichtundurchlässigem Kunststoff. Der Laserstrahl wird dann durch die laserlichtdurchlässige Filterhalbschale entlang der Berührungsstelle mit der anderen Filterhalbschale geführt, wo er auf die laserlichtundurchlässige Filterhalbschale trifft. Durch die Lichtabsorption des laserlichtundurchlässigen Kunststoffmaterials entsteht Hitze und es erfolgt ein Miteinanderverschmelzen der beiden Filterhalbschalen.

Die einzelnen Kunststoffhalbschalen der Ölfilter werden üblicherweise mittels Vibrations- oder Laserschweißverfahren miteinander verbunden. Dabei wird die obere Filterhalbschale mit der unteren Filterhalbschale verschweißt. Aus dem Stand der Technik sind verschiedene Vibrationsschweißverfahren bekannt.

So beschreibt die US 5,853,577 einen Filter für Flüssigkeiten, bestehend aus einem Ober- und einem Unterteil aus Kunststoff, wobei diese Teile durch ein orbitales Vibrationsschweißverfahren miteinander verbunden werden. Der Ölfilter wird für Motoren und Getriebe eingesetzt.

Die US 5,049,274 beschreibt ein Verfahren zu Herstellung eines Ölfilters, dessen Ober- und Unterteil aus Kunststoff besteht. Dabei wird das Filtermaterial zwischen Ober- und Unterteil eingeklemmt und anschließend das Ober- und Unterteil durch ein Vibrationsschweißverfahren verbunden. Im Filteroberteil ist ein Pumpenanschlussstutzen vorgesehen. Als bevorzugtes Verfahren wird lineares Vibrationsschweißen eingesetzt.

Die vorliegende Erfindung bezieht sich auf eine Verbesserung des Vibrationsschweißverfahrens bei Ölwannen mit integriertem Ölfilter.

Er versteht sich von selbst, dass bei der Herstellung von Ölfiltern mit äußerster Sauberkeit, aber auch Genauigkeit gearbeitet werden muss. Die Ölfilter besitzen im Allgemeinen einen Pumpenanschlussstutzen, der aus der Ebene der Filterhalbschale herausragt. Die Montage am Motor oder dem Getriebe erfolgt meist so, dass die Ölwanne mit dem integrierten Filter unterhalb des Motor- oder Getriebeblocks befestigt wird, wobei der aus der Filterebene herausragende Pumpenstutzen zunächst mit dem Motor- oder Getriebeblock verbunden wird. Anschließend erfolgt eine Montage der gesamten Ölwanne am Motor- oder Getriebeblock durch entsprechende, am Rand der Ölwanne vorgesehene Buchsen.

Es ist daher wichtig, dass die Ölwannen möglichst passgenau hergestellt werden und die Toleranzen bei der Herstellung so niedrig wie möglich gehalten werden, damit eine spannungsfreie Montage am Motor- oder Getriebeblock möglich ist. Hinzu kommt, dass bei einem Verzug oder einer Biege- oder Druckbelastung der Kunststoffteile im anmontierten Zustand Undichtigkeiten im Verschweißungsbereich auftreten können, was zu Ölleckage führen kann und im schlimmsten Fall zum kompletten Ausfall der Filterfunktion.

Das Vibrationsschweißverfahren ist ein Verfahren, bei dem die zu verschweißenden Teile gegeneinander bewegt werden. Diese Bewegungen können je nach Art des Vibrationsschweißverfahrens unterschiedlich sein. So sind beispielsweise Linearvibrationsschweißverfahren, Orbitalvibrationsschweißverfahren, Zirkularvibrationsschweißverfahren oder Verschweißen mittels Ultraschall bekannt. All diesen Verfahren gemeinsam ist, dass die zu verschweißenden Teile in bestimmte Richtungen durch Einbringen von Energie gegeneinander bewegt werden. Die dabei entstehende Wärme führt zu einem Aufschmelzen der zu verbindenden Ränder, so dass die Teile nach dem Abkühlen miteinander verbunden sind. Da die Teile während des Verschweißens gegeneinander bewegt werden, ist die Stellung der zu verschweißenden Teile zueinander am Ende des Schweißvorganges nicht immer gleich. Sie variiert vielmehr im Rahmen bestimmter Toleranzen der jeweiligen Vibrationsschweißbewegungen.

Dies führt jedoch im Ergebnis dazu, dass die entsprechenden, mittels des Vibrationsschweißverfahrens gefertigten Teile, höhere Toleranzen aufweisen, als beispielsweise Teile, die mit Schweißverfahren hergestellt werden, die keine Bewegung der zu verschweißenden Teile gegeneinander notwendig machen.

Für eine einwandfreie Funktion des Motors oder Getriebes ist es aber notwendig, dass die Verbindung der Ölwanne mit dem Motor- oder Getriebeblock und die Verbindung Ölwanne Filterhalbschale derart dauerhaft ist, dass Ölleckagen oder Lufteintritt vermieden werden. Hier muss man sich weiterhin vergegenwärtigen, dass die Temperaturbelastungen, die eine Ölwanne ausgesetzt ist, erheblich sind und je nach geographischer Region, wo der entsprechende Motor oder das Getriebe verwendet wird, im Bereich von minus 40 bis plus 160 °C liegen kann. Hinzu kommen mechanische Belastungen der Ölwanne, beispielsweise durch Einfluss äußerer Ereignisse wie Steinschlag, Schlaglöcher etc.. Gleiches gilt auch für den in der Ölwanne integrierten Ölfilter, der ebenfalls dicht verschlossen sein muss, um eine einwandfreie Funktion über lange Zeit gewährleisten zu können.

Die JP 2001225388 beschreibt eine Positioniervorrichtung für eine Vibrationsschweißmaschine zum Verschweißen von zwei länglichen Kunstharzbauteilen. Durch diese Vorrichtung kann eines der beiden Kunstharzbauteile vor dem Vibrationsschweißen relativ zum anderen Kunstharzbauteil positioniert werden.

Die EP 0 707 919 A1 beschreibt ein Verfahren zum Reibschweißfügen von Bauteilen, wobei die zu verschweißenden Bauteile in der Ausgangslage miteinander fluchten. Im Anschluss an den Schweißvorgang wird das während des Schweiß-vorganges bewegte Bauteil mechanisch zwangsgeführt in die fluchtende Ausgangslage mit dem ortsfesten Bauteil gebracht. Die Bauteile werden mit Hilfe von Teilaufnahmen und Spannmittel eines Schwingschweißkopfes aufgenommen. Das Verfahren bezieht sich allgemein auf das Reibschweißen symmetrischer oder unsymmetrischer, aus Kunststoff oder Metall gefertigter technischer Bauteile mit beliebiger Kontur

Eine technische Aufgabe der Erfindung liegt daher darin, ein Vibrationsschweißverfahren für Ölwannen mit integrierter Ölfiltereinheit so zu modifizieren, dass bei den so gefertigten Teilen möglichst geringe Toleranzen entstehen und ein verspannungsfreies Montieren der Teile am Motor- oder Getriebeblock ermöglicht wird. Diese technische Aufgabe wird gelöst durch ein Verfahren zur Herstellung einer Kunststoffölwanne mit integriertem Ölfilter, umfassend die folgenden Schritte: Einlegen des Filtervlieses in einen in der (51wanne integrierten Flächenabschnitt, der die erste Filterhalbschale bildet, Anordnen der Ölwanne mit eingelegtem Filtervlies in der ersten Werkzeughälfte, Anordnen der zweiten Filterhalbschale in der zweiten Werkzeughälfte, Schließen der Werkzeughälften, so dass der Rand des die erste Filterhalbschale bildenden Flächenabschnittes der Ölwanne auf den Rand der zweiten Filterhalbschale gedrückt wird, Verbinden der Ränder durch Vibrationsschweißen, wobei die zweite Filterhalbschale auf dem Flächenabschnitt der Ölwanne so fixiert wird, dass zwischen dem Rand der zweiten Filterhalbschale und dem Rand des Flächenabschnittes der Ölwanne eine hermetisch geschlossene Verbindung entsteht und wobei die zweite Filterhalbschale am Ende des Vibrationsschweißvorganges relativ zur Ölwanne in einer vorher definierten Position angeordnet ist, wobei die Positionierung über mindestens zwei Mitnahmepunkte erfolgt, die auf der Außenseite der Filterhalbschale oder der Außenseite der Ölwanne angeordnet sind, wobei geeignete Positioniermittel in mindestens einer der Werkzeughälften während des Vibrationsschweißvorganges in die Mitnahmepunkte greifen und diese Positioniermittel so gesteuert werden, dass sich am Ende des Vibrationsschweißvorganges die vorher definierte Position von Ölwanne und zweiter Filterhalbschale zueinander einstellt, Öffnen des Werkzeuges und Entnahme der Ölwanne mit der angeschweißten zweiten Filterhalbschale.

Der Vorteil des erfindungsgemäßen Verfahrens besteht darin, dass durch Steuerung der Position von Ölwanne und Filterhalbschale während des Vibrationsschweißvorganges erreicht werden kann, dass die Position der zweiten Filterhalbschale relativ zur Position der Ölwanne am Ende des Vibrationsschweißvorganges immer gleich ist. Dadurch wird eine höhere Passgenauigkeit der Ölwanne bei der anschließenden Montage am Motor- oder Getriebeblock erzeugt. Weiterhin werden auch Verspannungen bei der Montage vermieden, die bei Teilen mit höheren Toleranzen auftreten können und die Funktion der Ölwanne bezüglich Dichtheit und Haltbarkeit nachteilig beeinflussen können.

Die Positionierung erfolgt über mindestens zwei Mitnahmepunkte, die auf der Außenseite der Filterhalbschale oder der Außenseite der Ölwanne angeordnet sind. Es werden geeignete Positioniermittel in mindestens einer der Werkzeughälften während des Vibrationsschweißvorganges eingesetzt. Diese Positioniermittel greifen während des Verschweißvorganges in die Mitnahmepunkte und werden so gesteuert, dass am Ende des Vibrationsschweißvorganges die Ölwanne und die zweite Filterhalbschale in einer vorher definierten Position zueinander stehen. Die Mitnahmepunkte sind in besonders bevorzugter Ausführungsform an der Außenseite der zweiten Filterhalbschale angeordnet. Die Positioniermittel sind in ganz bevorzugter Weise Zapfen, die sich in einer der Werkzeughälften befinden.

Zur Herstellung der Kunststoffölwanne wird die Ölwanne in bevorzugter Weise in ein Unterwerkzeug gelegt und die Filteroberschale mit dem daran befindlichen Pumpenanschlussstutzen in ein Oberwerkzeug eingelegt. Die Positioniermittel sind in bevorzugter Weise im Oberwerkzeug angeordnet. Es handelt sich um Zapfen, die in die auf der Außenseite der Filteroberschale angeordneten Mitnahmepunkte greifen.

Die Ölwanne und die Filterhalbschale werden vor dem Schließen des Werkzeuges in den Werkzeughälften durch Vakuum angesaugt. Hierbei wird ein Vakuum von >700 mbar eingesetzt. Durch diese Maßnahme wird gewährleistet, dass die Ränder der zu verschweißenden Teile möglichst geradlinig sind. Bei genauerer Messung der Ränder ist nämlich festzustellen, dass diese häufig leicht gebogen sind, was sich beim Verschweißen nachteilig auswirkt und zu undichten Verschweißungen führen kann.

In die Ölwanne wird vor dem Anordnen im Unterwerkzeug das Filtervlies in den in die Ölwanne integrierten Flächenabschnitt eingelegt. Vor dem Schließen des Werkzeuges wird durch geeignete Messmittel, vorzugsweise eine Kamera, mit entsprechendem Messprogramm die Position des Filtervlieses in der Ölwanne überprüft. Hierdurch wird gewährleistet, dass das Filtervlies sich tatsächlich in dem integrierten Flächenabschnitt der Ölwanne befindet.

Das Verschweißen erfolgt als lineares Vibrationsschweißen, zirkulares Vibrationsschweißen oder orbitales Vibrationsschweißen, wobei das lineare Vibrationsschweißen bevorzugt ist. Die Verfahrensparameter des Verschweißvorganges sind wie folgt: Anpassdruck 50 bis 90 bar, vorzugsweise 70 bis 80 bar, Vibrationsfrequenz 100 bis 300 Hz, vorzugsweise 240 Hz, Schweißzeit 1 bis 10 s, vorzugsweise 4 bis 6 s..

Es ist weiterhin bevorzugt, dass vor dem Einlegen der zweiten Filterhalbschale in die Werkzeughälfte der Pumpenanschlussstutzen, der sich auf der Außenseite der zweiten Filterhalbschale befindet, mit geeigneten Verschlussmitteln verschlossen wird. Besonders bevorzugt wird der Pumpenanschlussstutzen mit einem O-Ring versehen und seine Öffnung mit einem Verschlussstopfen verschlossen. Hierdurch wird gewährleistet, dass während des Schweißvorganges oder der weiteren Montage der Ölwanne keine Verschmutzungen, Staubpartikel oder Schweißabrieb durch die Pumpenanschlussstutzen in das Innere des Ölfilters gelangt. Solche Verschmutzungen können die Funktion des Ölfilters, der Ölpumpe und auch die Haltbarkeit des Filters erheblich gefährden.

Die Ölwanne weist in ihrem Randbereich Bohrungen auf, die dazu dienen, die Ölwanne am Motor- oder Getriebeblock zu befestigen. Da dieser Rand aus Kunststoff bestehet, müssen die Bohrungen mit entsprechenden metallischen Buchsen versehen werden, durch die dann später bei der Montage entsprechende Befestigungsmittel, wie z. B. Schrauben, zur Kraftübertragung geführt werden können.

Diese Buchsenmontage erfolgt nach dem Entnehmen der verschweißten Ölwanne aus dem Werkzeug. Dabei werden die Bohrungen in bevorzugter Weise vor der Buchsenmontage von Positionierstiften erfasst, die die Buchsenmontageköpfe steuern und die Buchsen in die Bohrungen am Rand der Ölwanne drücken. Die Buchsenmontagevorrichtung verfügt bevorzugt über ein bis drei Buchsenmontageköpfe, die ein bis drei Buchsen gleichzeitig montieren können.

Es ist bevorzugt, dass die Buchsenmontage durch zwei Buchsenmontageköpfe erfolgt, wobei einer der Köpfe räumlich fixiert angeordnet ist und der andere Kopf beweglich angeordnet ist. Durch diese Maßnahme können Toleranzen bei den Abständen der entsprechenden Bohrungen im Ölwannenrand berücksichtigt und ausgeglichen werden. Es ist weiterhin bevorzugt, dass die Zuführung der Buchsen mechanisch über einen flexiblen Schlauch in die Buchsenmontageköpfe erfolgt. Dabei werden die Buchsen in steigender Anordnung bis zu einem Fallpunkt gestapelt. Sie fallen dann durch die Schwerkraft am Fallpunkt in eine entsprechende Zuführung in den Buchsenmontageköpfen. Durch diese Maßnahme wird insbesondere der Einsatz von Druckluft vermieden. Der Einsatz von Druckluft führt häufig zu einem Mitreißen von Verschmutzungen durch die Buchsenzuführung in den Buchsenmontagkopf und damit auch in die Ölwanne oder den Ölfilter. Durch diese Maßnahme wird somit ein möglichst verschmutzungsfreies Arbeiten während des Herstellungsverfahrens gewährleistet, um eine Langlebigkeit und langlebige Dichtheit der Ölwanne zu gewährleisten.

Nach der Buchsenmontage erfolgt die Montage der Ölwannendichtung, die umlaufend in eine Nut am Rand der Ölwanne eingedrückt wird. Weiterhin werden die Magnete im Inneren der Ölwanne montiert. Diese dienen zur Entfernung von magnetischen Metallpartikeln aus dem Öl, das in der Ölwanne zirkuliert. In einem weiteren Verfahrensschritt erfolgt dann das Eindrehen der Ölablassschraube in die Ölwanne sowie eine Dichtheitsprüfung des Ölfilters und der gesamten Ölwanne mittels Unterdruck.

Hierzu wird zunächst die Dichtheitsprüfung des Ölfilters durch Unterdruck vorgenommen. Hierbei wird geprüft, ob eventuelle Risse in der Verbindung zwischen Ölwanne und Filterhalbschale vorhanden sind oder ob Teile nicht voll ausgespritzt sind. Weiterhin wird geprüft, ob die Verschlusskappe am Pumpenanschlussstopfen mit einem entsprechenden O-Ring vorhanden ist und dicht ist.

Es erfolgt dann das Eindrehen der Ölablassschraube mit einem definierten Drehmoment und einem vorher bestimmten Drehwinkel. Danach wird die Dichtheitsprüfung der gesamten Ölwanne ebenfalls mittels Unterdruck vorgenommen. Hierbei wird geprüft, ob die Ölwannendichtung ihre Funktion erfüllt, ob Risse oder Beschädigungen in der Ölwanne vorhanden sind oder Teilbereiche nicht voll ausgespritzt sind. Weiterhin wird auch die Dichtigkeit der Ölablassschrauben geprüft und ob der Magnet vorhanden und auch magnetisierbar ist.

Es erfolgt dann in einem weiteren Verfahrenschritt noch eine Differenzdruckprüfung an der Ölablassschraube mit einem Überdruck, um zu prüfen, ob die Ölablassschraube dicht ist.

Mit dem erfindungsgemäßen Verfahren können Kunststoffölwannen mit integriertem Ötfitter in hoher Qualität hergestellt werden. Durch das Verfahren wird gewährleistet, dass die Toleranzen bei den hergestellten Teilen erheblich geringer sind, als bei Teilen, die nach dem Stand der Technik hergestellt werden. Weiterhin ist hierdurch eine spannungsfreie Montage am Motor- oder Getriebeblock gewährleistet. Das erfindungsgemäße Verfahren ist weiterhin gegenüber dem Verfahrens des Standes der Technik so modifiziert, dass das Eindringen von Verunreinigungen während des Herstellungsprozesses in den Ölfilter vermieden wird. Hierdurch wird ebenfalls die Funktion und die Langlebigkeit der Ölwanne mit integriertem Ölfilter gesichert.

## Patentansprüche

1. Verfahren zur Herstellung einer Kunststoffölwanne mit integriertem Ölfilter umfassend die folgenden Schritte:
Einlegen des Filtervlieses in einen in der Ölwanne integrierten Flächenabschnitt, der die erste Filterhalbschale bildet, Anordnen der Ölwanne mit eingelegtem Filtervlies in der ersten Werkzeughälfte, Anordnen der zweiten Filterhalbschale in der zweiten Werkzeughälfte, Schließen der Werkzeughälften, so dass der Rand des die erste Filterhalbschale bildenden Flächenabschnittes der Ölwanne auf den Rand der zweiten Filterhalbschale gedrückt wird, Verbinden der Ränder durch Vibrationsschweißen, wobei die zweite Filterhalbschale auf dem Flächenabschnitt der Ölwanne so fixiert wird, dass zwischen dem Rand der zweiten Filterhalbschale und dem Rand des Flächenabschnittes der Ölwanne eine hermetisch geschlossene Verbindung entsteht und wobei die zweite Filterhalbschale am Ende des Vibrationsschweißvorganges relativ zur Ölwanne in einer vorher definierten Position angeordnet ist, wobei die Positionierung über mindestens zwei Mitnahmepunkte erfolgt, die auf der Außenseite der Filterhalbschale oder der Außenseite der Ölwanne angeordnet sind, wobei geeignete Positioniermittel in mindestens einer der Werkzeughälften während des Vibrationsschweißvorganges in die Mitnahmepunkte greifen und diese Positioniermittel so gesteuert werden, dass sich am Ende des Vibrationsschweißvorganges die vorher definierte Position von Ölwanne und zweiter Filterhalbschale zueinander einstellt, Öffnen des Werkzeuges und Entnahme der Ölwanne mit der angeschweißten zweiten Filterhalbschale.

2. Verfahren nach Anspruch 1,
**dadurch gekennzeichnet,**
**dass** die Mitnahmepunkte an der Außenseite der zweiten Filterhalbschale angeordnet sind.

3. Verfahren nach Anspruch 1 und 2,
**dadurch gekennzeichnet,**
**dass** die Positioniermittel Zapfen sind, die sich in einer Werkzeughälfte befinden.

4. Verfahren nach einem oder mehreren der Ansprüche 1 bis 3,
**dadurch gekennzeichnet,**
**dass** die Ölwanne im Unterwerkzeug und die Filteroberschale im Oberwerkzeug eingelegt wird.

5. Verfahren nach einem oder mehreren der Ansprüche 1 bis 4,
**dadurch gekennzeichnet,**
**dass** die Positioniermittel im Oberwerkzeug angeordnet sind

6. Verfahren nach einem oder mehreren der Ansprüche 1 bis 5,
**dadurch gekennzeichnet,**
**dass** die Position des Filtervlieses in der Ölwanne vor dem Schließen des Werkzeuges mittels entsprechenden Messmitteln geprüft wird.

7. Verfahren nach einem oder mehreren der Ansprüche 1 bis 6,
**dadurch gekennzeichnet,**
**dass** die Ölwanne und die zweite Filterhalbschale nach dem Einsetzen in die Werkzeughälften und vor dem Schließen des Werkzeuges in den Werkzeughälften durch Vakuum angesaugt werden.

8. Verfahren nach einem oder mehreren der Ansprüche 1 bis 7,
**dadurch gekennzeichnet,**
**dass** die zweite Filterhalbschale einen Pumpenanschlussstutzen aufweist, dessen Öffnung vor dem Einlegen der zweiten Filterhalbschale in die Werkzeughälfte mit einem Verschlussstopfen verschlossen wird.

9. Verfahren nach einem oder mehreren der Ansprüche 1 bis 8,
**dadurch gekennzeichnet,**
**dass** das Vibrationsschweißen als lineares Vibrationsschweißen, zirkulares Vibrationsschweißen oder orbitales Vibrationsschweißen durchgeführt wird.

10. Verfahren nach einem oder mehreren der Ansprüche 1 bis 9,
**dadurch gekennzeichnet,**
**dass** die Ölwanne in Ihrem Randbereich Bohrungen aufweist, in die metallische Buchsen eingebracht werden, um die Ölwanne am Motor oder Getriebe befestigen zu können

11. Verfahren nach Anspruch 10,
**dadurch gekennzeichnet,**
**dass** nach dem Entnehmen der verschweißten Ölwanne aus dem Werkzeug die Buchsenmontage erfolgt, wobei die Buchsenzuführung mechanisch über einen flexiblen Schlauch erfolgt, in dem die Buchsen in steigender Anordnung bis zu einem Fallpunkt gestapelt sind und am Fallpunkt durch Schwerkraft in eine entsprechende Zuführung in der Buchsenmontagevorrichtung fallen.

12. Verfahren nach Ansprüchen 10 oder 11,
**dadurch gekennzeichnet,**
**dass** bei der Montage der Buchsen 1 bis 3 Buchsen gleichzeitig montiert werden.

13. Verfahren nach einem oder mehreren der Ansprüche 10 bis 12,
**dadurch gekennzeichnet,**
**dass** die Bohrungen vor der Buchsenmontage von Positionierstiften erfasst werden, die die Buchsenmontageköpfe steuern und die Buchsen in die Bohrungen am Rand der Ölwanne drücken.

## Claims

1. A method of manufacturing a plastic oil pan having an integrated oil filter, the method comprising:
placing the filter fleece into an oil pan integrated surface section which constitutes the first filter half-shell;
placing the oil pan with the filter fleece placed into it into the first tool half;
placing the second filter half-shell in the second tool half;
closing the tool halves so that the flange of the surface section of the oil pan constituting the first filter half-shell is pressed unto the flange of the second filter half-shell;
connecting the flanges by vibration welding, with the second filter half-shell being fixed upon the surface section of the oil pan in a manner to create a hermetic sealed connection between the flange of the second filter half-shell and the flange of the surface section of the oil pan, and with the second filter half-shell being arranged relative to the oil pan in a previously defined position at the completion of the vibration welding process,
positioning being effected via at least two engaging points which are placed on the outer side of the filter half-shell or on the outer side of the oil pan,
with appropriate positioning aids in at least one of the filter half-shells engaging the engaging points during the vibration welding process and these positioning aids being controlled in a manner that at the completion of the vibration welding process the oil pan and the second filter half-shell are arranged in a previously defined position;
opening the tool and removing the oil pan with the second filter half-shell welded to the oil pan.

2. The method in accordance with claim 1, **characterized in that** the engaging points are placed on the outer side of the second filter half-shell.

3. The method in accordance with claims 1 and 2, **characterized in that** the positioning aids are studs that are located in one of the tool halves.

4. The method in accordance with any one of claims 1 to 3, **characterized in that** the oil pan is placed into the lower tool and the upper filter half-shell into the upper tool.

5. The method in accordance with any one of claims 1 to 4, **characterized in that** the positioning aids are arranged in the upper tool.

6. The method in accordance with any one of claims 1 to 5, **characterized in that** the position of the filter fleece in the oil pan is verified by means of appropriate measuring devices prior to closing the tool.

7. The method in accordance with any one of claims 1 to 6, **characterized in that** the oil pan and the second filter half-shell are vacuum sucked after placement into the tool halves and prior to closing the tool.

8. The method in accordance with any one of claims 1 to 7, **characterized in that** the second filter half-shell has a pump inlet the opening of which is closed with a plug prior to the placement of the second filter half-shell in the tool half.

9. The method in accordance with any one of claims 1 to 8, **characterized in that** vibration welding is performed in a linear manner, a circular or an orbital manner.

10. The method in accordance with any one of claims 1 to 9, **characterized in that** the outer flange of the oil pan is provided with bore holes into which metal bushings are inserted in order to secure the oil pan to the engine or to the gear box.

11. The method in accordance with claim 10, **characterized in that** after taking the welded oil pan out of the tool the bushings are assembled, the insertion of the metal bushing being performed mechanically by means of a flexible tube into which the bushings are stacked in ascending order up to a dropping point and by means of gravity will drop into an appropriate feed in the bushing assembly fixture at the dropping point.

12. The method in accordance with any one of claims 10 or 11, **characterized in that** in assembly of the bushings 1 to 3 bushings are assembled simultaneously.

13. The method in accordance with any one of claims 10 to 12, **characterized in that** prior to assembly of the bushings the bore holes are grasped by positioning studs that control the bushing assembly heads and press the bushings into the bore holes in the flange of the oil pan.

## Revendications

1. Procédé de fabrication d'un carter d'huile en matière plastique à filtre à huile intégré, comprenant les étapes suivantes :
pose du voile filtrant dans une section de surface intégrée au carter d'huile et qui forme la première demi-coque du filtre, mise en place du carter d'huile avec le voile filtrant posé dans la première moitié d'outil, mise en place de la deuxième demi-coque de filtre dans la deuxième moitié d'outil, fermeture des moitiés d'outil, de telle sorte que le bord de la section de surface du carter d'huile formant la première demi-coque de filtre soit appuyée sur le bord de la deuxième demi-coque de filtre, liaison des bords par soudage vibratoire, la deuxième demi-coque de filtre étant fixée sur la section de surface du carter d'huile de telle manière qu'entre le bord de la deuxième demi-coque de filtre et le bord de la section de surface du carter d'huile se forme une liaison hermétiquement fermée, et la deuxième demi-coque de filtre étant placée, à la fin de l'opération de soudage vibratoire, dans une position définie antérieurement par rapport au carter d'huile, le positionnement s'effectuant par l'intermédiaire d'au moins deux points d'entraînement qui sont placés sur la face extérieure de la demi-coque de filtre ou sur la face extérieure du carter d'huile, des moyens de positionnement appropriés dans au moins l'une des moitiés d'outil se mettant en prise dans les points d'entraînement pendant l'opération de soudage vibratoire et ces moyens de positionnement étant commandés de telle sorte qu'à la fin de l'opération de soudage vibratoire, il s'instaure la position prédéfinie du carter d'huile et de la deuxième demi-coque de filtre, ouverture de l'outil et extraction du carter d'huile avec la deuxième demi-coque de filtre rapportée par soudage.

2. Procédé selon la revendication 1, ***caractérisé en ce que*** les points d'entraînement sont placés sur la surface extérieure de la deuxième demi-coque de filtre.

3. Procédé selon la revendication 1 et 2, ***caractérisé en ce que*** les moyens de positionnement sont des tenons qui se trouvent dans une moitié d'outil.

4. Procédé selon l'une ou plusieurs des revendications 1 à 3, ***caractérisé en ce que*** le carter d'huile est posé dans l'outil inférieur et la coque supérieur de filtre dans l'outil supérieur.

5. Procédé selon l'une ou plusieurs des revendications 1 à 4, ***caractérisé en ce que*** les moyens de positionnement sont placés dans l'outil supérieur.

6. Procédé selon l'une ou plusieurs des revendications 1 à 5, ***caractérisé en ce que*** la position du voile filtrant dans le carter d'huile est vérifiée avant la fermeture de l'outil avec des moyens de mesure appropriés.

7. Procédé selon l'une ou plusieurs des revendications 1 à 6, ***caractérisé en ce qu*****'**après la mise en place dans les moitiés d'outil et avant la fermeture de l'outil, le carter d'huile et la deuxième demi-coque de filtre sont aspirées dans les moitiés d'outil par un vide.

8. Procédé selon l'une ou plusieurs des revendications 1 à 7, ***caractérisé en ce que*** la deuxième demi-coque de filtre présente un embout de raccordement de pompe dont l'ouverture est fermée avec un bouchon de fermeture avant la mise en place de la deuxième demi-coque de filtre dans la moitié d'outil.

9. Procédé selon l'une ou plusieurs des revendications 1 à 8, ***caractérisé en ce que*** le soudage vibratoire est conduit sous forme de soudage vibratoire linéaire, soudage vibratoire circulaire ou soudage vibratoire orbital.

10. Procédé selon l'une ou plusieurs des revendications 1 à 9, ***caractérisé en ce que*** le carter d'huile présente dans sa partie de bord des perçages dans lesquels sont insérées des douilles métalliques, afin de pouvoir fixer le carter d'huile sur le moteur ou la boîte de vitesse.

11. Procédé selon la revendication 10, ***caractérisé en ce* qu'**après l'extraction du carter d'huile soudé hors de l'outil a lieu le montage des douilles, l'alimentation des douilles se faisant mécaniquement par l'intermédiaire d'un tuyau flexible, dans lequel les douilles sont empilées de manière croissante jusqu'à un point de chute et tombent au point de chute par gravité dans une alimentation adaptée du dispositif de montage de douilles.

12. Procédé selon les revendications 10 ou 11, ***caractérisé en ce que*** 1 à 3 douilles sont montées simultanément lors du montage des douilles.

13. Procédé selon l'une ou plusieurs des revendications 10 à 12, ***caractérisé en ce que*** les perçages sont saisis avant le montage des douilles par des ergots de positionnement qui commandent les têtes de montage de douilles et pressent les douilles dans les perçages sur le bord du carter d'huile.
